# EUROPEAN PATENT APPLICATION

(11) **EP 0 853 155 A2**
(43) Date of publication of application: **15.07.1998**
(21) Application number: 98300025.8
(22) Date of filing: 05.01.1998
(51) Int. Cl.: D05B 73/00, D05B 1/12, D05B 1/20, D05B 69/34, F16D 11/14

(54) **Sewing machine and clutch**

(30) Priority: 08.01.1997 CN 97106205; 04.03.1997 CN 97206671
(71) Applicant: Fung, Man Kit, Kowloon (HK)
(72) Inventor: Fung, Man Kit, Kowloon (HK)
(74) Representative: Rackham, Stephen Neil

(57) **Abstract**

A sewing machine includes a head for plain seaming and a head for closed seaming. It includes a base plate (33), a case (27) and a front panel installed on the base plate, the heads installed on the case (27), a motor (1) and the drive gear (6,8,11,13,14,17) installed inside the case (27). The characteristics of the double-head sewing machine are double heads for both plain seaming and closed seaming, the matching drive gear is installed in the case (27), and there is a turntable (24) installed under the base plate (33). The structure of this invention is compact and its size is similar to ordinary plain seaming sewing machines. It is the combined machine for plain seaming and closed seaming, which saves both space and money, and it is convenient to use and carry about, and is an ideal equipment for making clothes.

## Description

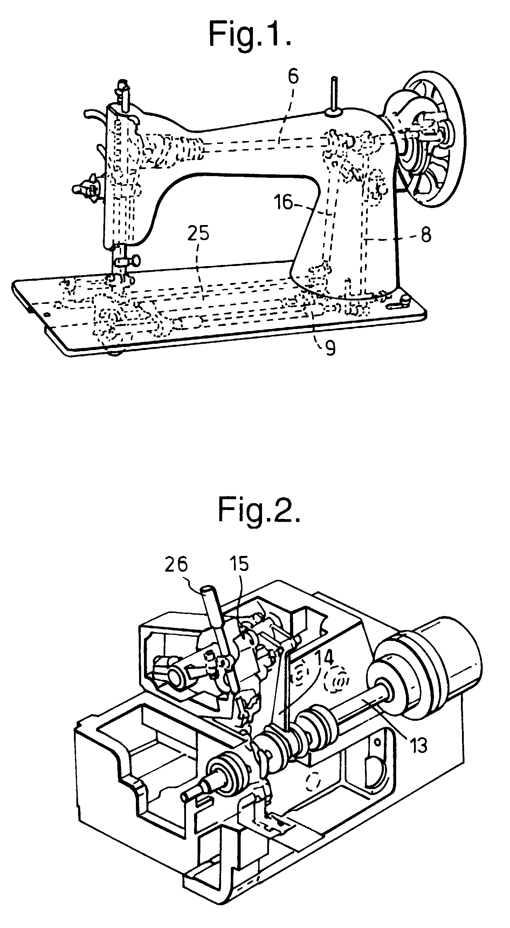

Machinery is an important part of modern garment manufacturing and sewing machines are the key equipment of the clothing industry. As the products which indicate the progress of human beings and the continuous development of science and technology, sewing machines have become inseparable tools in peoples life. Although there are many different types of sewing machines, the most commonly used in garment manufacturing can be divided into two types. One is called a plain seaming sewing machine which can sew two pieces of cloth together. Figure 1 shows this kind of machine. The plain seaming sewing machine mainly includes a base plate, a working panel, a front panel and a case which is installed on the base plate, with the heads and the motive power and drive gear being installed in the case. The motive force is transferred by the belt to a crank shaft 6 which turns, and transfers the motive power through a connecting rod 8 to a lower shaft 9 and through the connecting rod 16 to a cloth feeding shaft 25.

The other type of sewing machine is called a closed seaming sewing machine which can sew up the loose edge of the cloth whose fibres are loose as a result of cutting, to prevent the area of the loose fibre from further enlarging. Figure 2 shows the closed seaming sewing machine. For this kind of machine, the motive force is transferred from the belt to the lower shaft 13, which results in the turning of the lower shaft. The motive force is then transferred from a lower shaft to a needle bar shaft 15 through a connecting rod 14 which results in the turning of the needle bar shaft and the needle bar 26 moves up and down. Up till now, people mostly use single structure sewing machines. However, both different kinds of sewing machines (closed seaming and plain seaming) are commonly being used in the process of garment manufacture. Thus, it is not space-economical and is inconvenient to carry about two machines and the price is more expensive.

According to this invention a sewing machine including a base plate, a case, a motor and drive gear installed inside the case is characterised in that the sewing machine also includes two heads, one for plain seaming and one for closed seaming, and in that both heads are driven selectively from the said motor.

The sewing machine in accordance with this invention includes the plain seaming and the closed seaming sewing heads and their drive gear, and a new idea of motive force distribution gear. Although the basic principles used in the drive of the plain seaming head and the closed seaming head are those used previously, the space required is greatly reduced by making use of common parts for both. There is another motive force distribution component added to these two drives, namely a clutch.

Preferably the clutch comprises a sliding part having a first set of teeth which are permanently meshed with a corresponding set of teeth on a first pulley wheel, a second set of teeth which selectively mesh with a corresponding set of teeth on a second pulley wheel when the sliding part is in a first position, and a third set of teeth which selectively mesh with a corresponding set of teeth coupled to a crankshaft when the sliding part is in a second position, the second pulley wheel driving the closed seaming head and the crankshaft driving the plain seaming head.

Although the drive principle of the plain seaming and the closed seaming parts are the same, the space is greatly reduced. There is another motive force distributed component added to these two drive gears, and apart from keeping the original functions of the two types of sewing machines, the double-head sewing machine have to show its own characteristics. Thus, the design of the drive mechanism and proper installation are of great importance. The specific technological schemes are as follows : The double-head sewing machine mainly includes the base plate, the working panel and the front panel and the case installed on the base plate, the double-heads installed on the case, the motor and the drive gear installed inside the base plate and the case. The characteristics of the sewing machine are: there are double heads for plain seaming and closed seaming, and the matched drive gear. Inside the drive gear, the band wheel 2 installed on the shaft of the motor 1 is connected to band wheel 5 which is fixed on the shaft 4 through the belt 3. The shaft 4 is installed to the shaft hole of the case. The bent shaft 6 is installed to the shaft hole of the case, and one end of connecting rod 8 is matched to the sliding bush of bent shaft 6 while the other end of connecting rod 8 is connected to sliding bush of the lower shaft 9. There are tooth on the band wheel 10 and it is also connected to the sliding bush of bent shaft 6. The belt 11 is connected respectively to band wheels 10 and 12, and the band wheel 12 is fixed on the lower shaft 13 which is installed to the shaft hole of the case. One end of the connecting rod 14 is matched to the sliding bush of the lower shaft 13 while the other end is matched to the sliding bush of the needle bar shaft 15 which is installed to the shaft hole of the case. There are teeth on the circumcircle of the shaft sleeve 7 which fixed on the bent shaft 6. There is a tooth on the clutch 17 which is slide matched on the shaft sleeve 7. The spline tooth of the clutch 17 and the spline tooth of the band wheel 5 are mated. The fork 18 covers part of circumference of the clutch 17. One end of the fork lever 29 is passed through the case and the front panel while the other end is connected to the fork 18 and slide matched with the small shaft 30 which is fixed to the shaft hole of the case.

The structure of the sewing machine in accordance with this invention can be compact and is similar to that of ordinary plain seaming sewing machines. The combined machine for both plain seaming and closed seaming, saves both space and money, and it is also convenient to use and carry about, and is an ideal equipment for garment manufacture.

A particular example of a sewing machine in accordance with this invention will now be described with reference to the accompanying drawings; in which:-
Figure 1 is a schematic perspective view of a conventional plain seaming sewing machine;
Figure 2 is a schematic perspective view of a conventional closed seaming sewing machine;
Figure 3 is a perspective view of the double-head sewing machine in accordance with this invention;

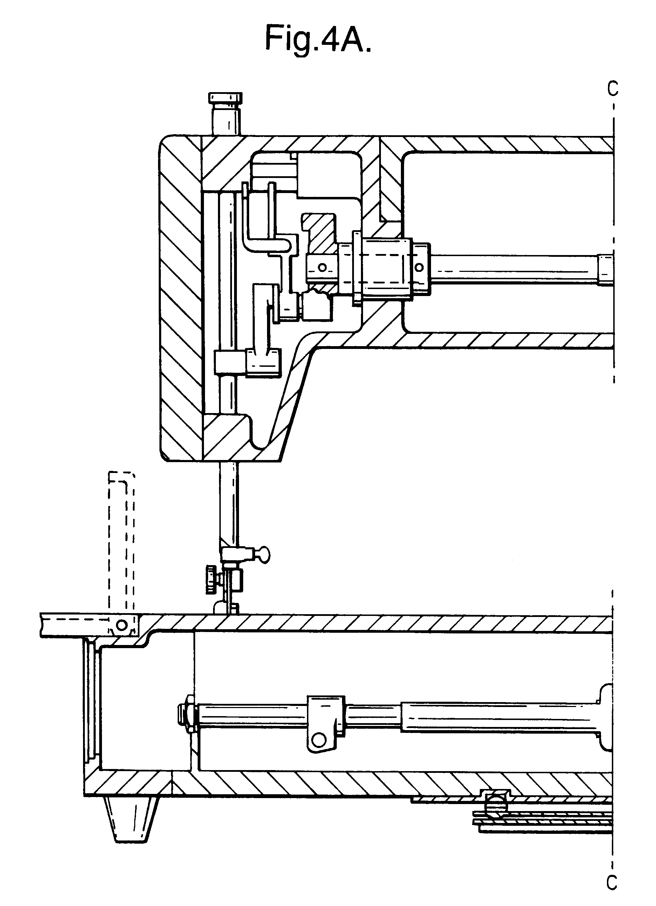

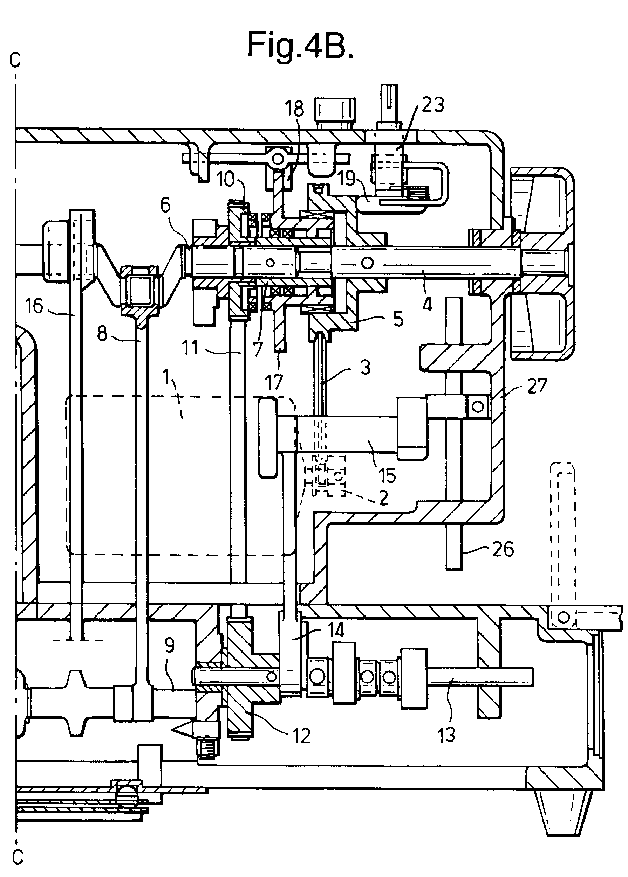

Figures 4a and 4b together form a composite vertical section through the machine to show the drive gear;
Figure 5 is a side elevation of a turntable forming part of the base plate.

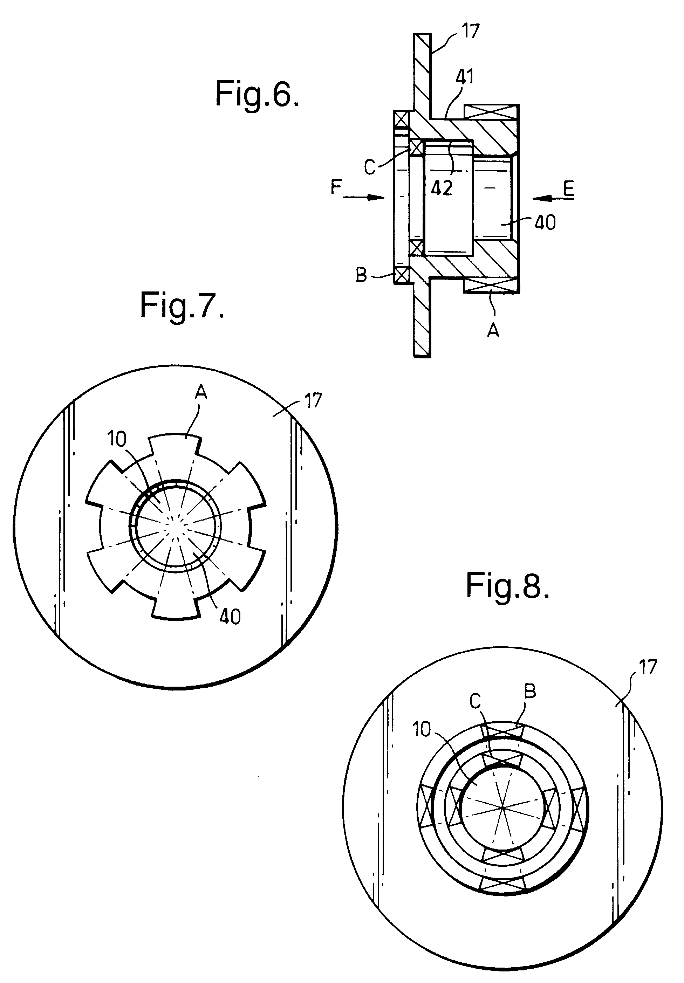

Figure 6 is a cross-section through a clutch slider;
Figure 7 is an end elevation of the clutch slider taken in the direction of arrow E in Figure 6;
Figure 8 is an end elevation of the clutch slider taken in the direction of arrow F in Figure 6;

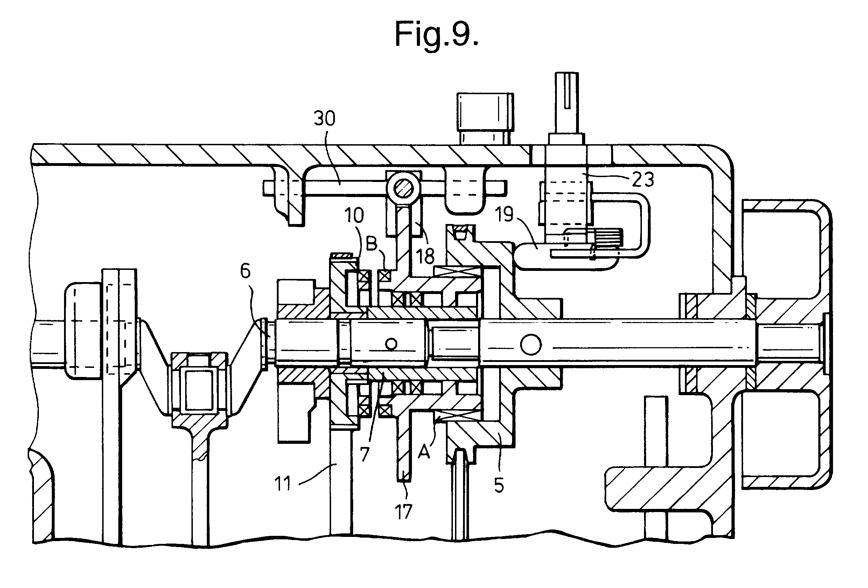

Figure 9 is a side elevation of the clutch portion of the drive mechanism drawn an enlarged scale; and
Figure 10 is a scrap cross-section illustrating the clutch operating mechanism.

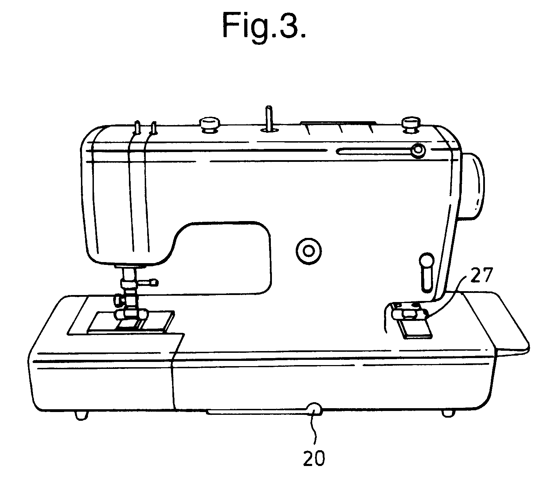

A double-head sewing machine in accordance with this invention includes a base plate 33, a case 27 and a front panel installed on the base plate, heads installed in the case 27, and a motor 1 and drive gear installed inside the case 27. The difference between the double-head sewing machine and the current technology are: that it includes both a head on the left hand side of Figure 3 for plain seaming and a head on the right hand side of Figure 3 for closed seaming, and drive gear for both installed in the case 27. There is only one power source and its characteristic is to combine power distribution to the plain seaming head and the closed seaming head with compact drive gear. In the drive gear, the motor 1 is fixed inside the case 27. A pulley wheel 2 is fixed to a shaft of the motor 1, and a belt 3 is connected between respectively two pulley wheels 2 and 5. Pulley wheel 5 is installed on a shaft 4 which is journalled in the case 27. A clutch 17 connects the pulley wheel 5 to either a crank shaft 6 of the plain seaming head or to a pulley wheel 10 which drives the closed seaming head. The crank shaft 6 is installed inside a shaft hole of the case 27, and a connecting rod 8 is journalled onto it. The pulley wheel 10 rotates on the crank shaft 6. And a belt 11 is connected between the pulley wheel 10 and pulley wheel 12. The pulley wheel 12 is fixed on a lower shaft 13 of the closed seaming head, the lower shaft 13 being journalled into shaft holes of the case 27. A connecting rod 14 is journalled onto an eccentric of the lower shaft 13 and the other end of the connecting rod 14 is connected to sliding bush of a needle bar shaft 15, which, in turn, is installed into a shaft hole in the case 27.

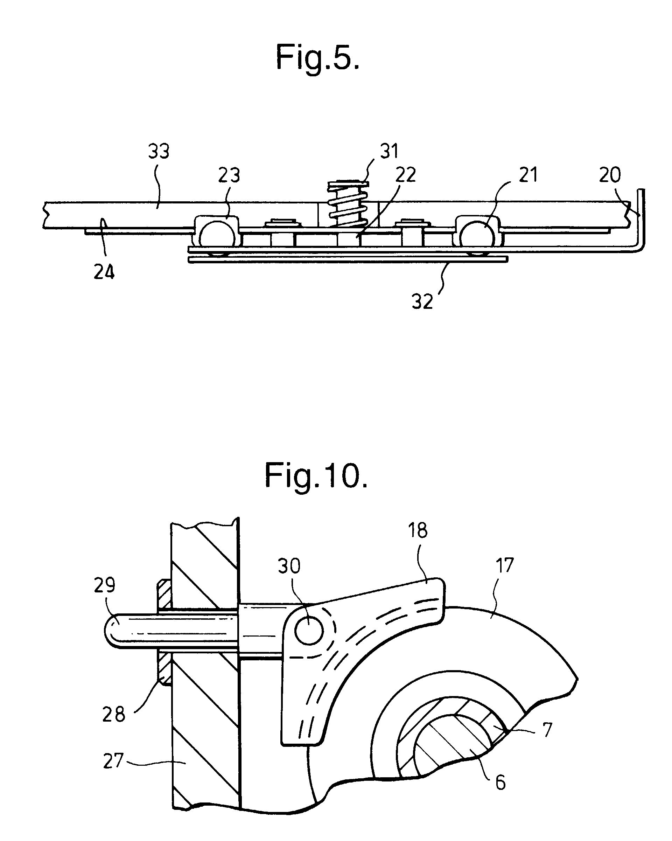

Since the two heads of the sewing machine are located at different positions, if the user wants to change the sewing function, he must change the working position. The sewing machine includes a turntable 24 which enables the user to operate the different sewing functions from the same position. The turntable 24 is placed under the base plate 33. The specific structure is shown in Figure 5 and includes a bottom plate 32 and turning shaft 22 on the turntable 24, and the bottom plate 32 is connected to the turning shaft 22. A lever 20 is slide matched to the turning shaft 22 and is placed on the bottom plate 32 together with steel balls 21. The steel ball seating 23 is slide sleeved to the turning shaft 22 and covers the steel balls 21. A spring 31 acts to urge the bottom plate 32 against the steel balls 21 and the steel balls 21 against the seating 23. The spring 31 is sleeved to the turning shaft 22. It ensures that there is no significant variation of the vertical distance between the steel ball seating 23 and the bottom panel 32 until the lever 20 is moved. In the practical example, there are oblique arcuate channels of varying depth on the connecting circumferences of the steel ball seating 23 and the steel balls 21. The turntable 24 is withheld on the round channel of the steel ball seating.

The operation procedures of the turntable structure are: the user pulls left the lever 20 at the front lower part of the sewing machine (the user faces the front side of the machine) to a specific position (e.g. turns by 60 degrees). The lever 20 moves the steel balls 21 and also fixes the position of the steel balls 21. The lever 20 will drive the steel ball 21 to turn 60 degrees on the specific circumference. The steel balls are initially in touch with both the bottom plate 32 and the steel ball seating 23 at one end of the oblique channel. When the steel ball moves around an angle of 60 degrees, the steel ball moves from the deepest part of the channel to the most shallow part, and the distance between the bottom plate 32 and the steel ball seating increases as the balls 21 ride up the channel. Under normal circumstances, the support of the machine depends on four points(known as four legs). The bottom plate is not connected to the supporting surface(i.e. the surface panel). However, when the lever is pulled, as the distance between the bottom plate and the steel ball seating increases, the bottom of the bottom plate touches the surface panel, which results in the four legs being lifted from the surface panel. The machine can then be horizontally rotated with the turning shaft 22 of the turntable which under the base plate acting as the centre by slightly lifting the case. The other of the plain seaming and the closed seaming working panel will then move to the users working position. Finally, turn the lever in the opposite direction to its original position to reset the distance between the bottom plate and the steel ball seating. The bottom plate moves up from the surface panel and the machine is again supported by its four legs. The change in the working position between the plain seaming and the closed seaming is then completed.

The clutch will now be described in more detail. It includes a clutch sliding block 17 having a shaft hole 40 a set of splines A and teeth B and C. The difference from the present technology is that the circumferential teeth A on one end of the circumference of the clutch sliding block are a splined teeth. Their crests and roots form a trace which is a coaxial circumference of the circumcircle of the clutch sliding block. There is a tool recess 41 between the circumferential tooth A and circular gauge block. On the other end of the circumcircle of the clutch sliding block 17, are teeth B which are a contrate teeth. Their tooth crests and roots form a trace which is the side surface perpendicular to the shaft hole of the clutch sliding block. On the inscribed circle of the clutch sliding block, there are teeth C which are circumferential teeth, on the same end as the teeth B. Their crests and roots form a trace which is a coaxial circumference of the inscribed circle of the clutch sliding block. There is a tool recess 42 on one side of the tooth C. In conclusion, there are three steps in the circumcircle and two in the inscribed circle of the clutch sliding block 11.

The clutch block 17 is located on the shaft sleeve 7 which is fixed on the crank shaft 6 of the plain seaming drive system. There are outer teeth on the circumcircle of the shaft sleeve 7. The pulley wheel 5 acts as a fixed block on one side of the clutch sliding block and includes inner spline teeth on the inscribed circle of the pulley wheel 5. In the assembly, the circumferential spline teeth A of the circumcircle and the circumferential spline tooth of the inscribed circle of the pulley wheel 5 are kept in constant mesh. There is a pulley wheel 10 at the other end of the clutch sliding block 17. On the pulley wheel 10, there are processed contrate teeth which fit with the teeth B of the clutch sliding block. A fork 18 covers part of the circumcircle of the clutch sliding block 17 and is connected to lever 29. When the power is on, the pulley wheel 5 transfers the power through the spline teeth to the clutch sliding block 17 so that the latter rotates. When the clutch sliding block 17 is moved to the left along the shaft by the fork 18 and lever 29, the teeth B on the left hand side surface will mesh with the teeth on the right hand side surface of the pulley wheel 10. The force to the pulley wheel 10, is transferred through the band 11 to the components of the closed seaming system drive. Then the closed seaming system is in working condition. When the closed seaming system is in working condition. When the clutch sliding block 17 is moved to the right along the shaft by the fork 18 and lever 29, the spline teeth C on the circumcircle of the inscribed circle will mesh with the circumferential spline teeth on the circumcircle of the shaft sleeve 7. The force to the shaft sleeve 7 causes the crank shaft 6 to revolve to drive the plain seaming drive system. When the clutch sliding block 17 is moved to the middle position by the fork 18, neither pulley wheel 10 nor the shaft sleeve 7 is in mesh. Then both the closed seaming and plain seaming systems are not in working condition. By selecting the distance between teeth B and C appropriately it can be arranged that in the centre position of the fork 18 both closed and plain seaming systems operate at the same time. When the pulley wheel 5 moves the friction wheel 19, the shaft 23 in direct connection with the friction wheel 19 also revolves synchronously, which can be used for thread-winding.

The operation of the double-head sewing machine is: The motive force is transferred from the motor 1 through band wheel 2 and belt 3 to the band wheel 5 installed on the shaft 4. Since there is spline tooth on the circumference of the clutch 17, when the spline tooth of the clutch 17 is mated to the spline tooth on the internal circle of circumference of the band wheel, the motive force is transferred from the band wheel 5 to the clutch 17 and the clutch will start to turn, and the clutch is slide sleeved to the shaft sleeve 7 which allows it to move freely along the shaft within a certain range. The user can pull the fork lever 29(if the user faces the machine, his left hand side is plain seaming and right hand side is closed seaming) and drive the fork 18 to move, and control the clutch 17 to move along the shaft sleeve 7. When the clutch 17 is moved to the right hand side, the tooth on its internal circle of circumference mates to the tooth on the circumference of the shaft sleeve 7, and the shaft sleeve 7 drives the bent shaft 6 of the plain seaming system to turn. The motive force is transferred to the lower shaft 9 through connecting rod 8 and the lower shaft will turn. The force is then transferred to the right shaft 25 through connecting rod 16 and the plain seaming system will start to operate. Since the friction wheel 19 is on the right side of the band wheel 5, the force is transferred to the band wheel 5 through friction and the band wheel will turn, and the small shaft will also turn for thread-winding. When the clutch 17 is moved to the left hand side, since its spline tooth is mated to the tooth of the band wheel, the band wheel 10 will turn. The force is transferred through belt 11 and band wheel 12 to the lower shaft 13 of the closed seaming system and makes the lower shaft 13 to turn. The force passes through connecting rod 14 to needle bar shaft 15 and makes it turn and drives the needle bar 26 to move up and down. The closed seaming system will start to operate. When the clutch is located in the middle position as shown in Drawing 4, both plain seaming and closed seaming are in operation.

The shaft sleeve 7 is fixed on the bent shaft 6 of the plain seaming system. The clutch 17 and the shaft sleeve 7 are slide connected. The fork 18 covers part of the circumference of the clutch 17. One end of the fork lever 29 passed through the case 27 and the front panel 28, and is outside the case for users to pull. The other end of the fork lever 29 is slide matched to small shaft 30 after connected to fork 18. The small shaft 30 is fixed into the shaft hole of the case.

## Claims

1. A sewing machine including a base plate (33), a case (27), a motor (1) and drive gear (6,8,11,13,14,17) installed inside the case (27), characterised in that the sewing machine also includes two heads, one for plain seaming and one for closed seaming, and in that both heads are driven selectively from the said motor (1)

2. A sewing machine according to claim 1, in which the drive from the motor (1) is coupled to either the plain seaming head or the closed seaming head via a clutch (17).

3. A sewing machine according to claim 2, in which the clutch (17) is a double dog clutch.

4. A sewing machine according to claim 2 or 3, in which the clutch comprises a sliding part (17) having a first set of teeth (A) which are permanently meshed with a corresponding set of teeth on a first pulley wheel (5), a second set of teeth (B) which selectively mesh with a corresponding set of teeth on a second pulley wheel (10) when the sliding part is in a first position, and a third set of teeth (C) which selectively mesh with a corresponding set of teeth coupled to a crankshaft (6) when the sliding part is in a second position, the second pulley wheel (10) driving the closed seaming head and the crankshaft (6) driving the plain seaming head.

5. A sewing machine according to claim 4, in which a selection fork (18) mounted slidably in the case (27) engages the sliding part (17) to slide it between its first and second positions.

6. A sewing machine according to claim 4 or 5, in which a motor (1) is coupled to and drives the first pulley wheel (5).

7. A sewing machine according to any one of the preceding claims, which also includes a turntable (24) installed under the base plate (33) together with a mechanism to lower the turntable (24) into contact with a surface carrying the sewing machine and thereby raise the sewing machine to enable it to be turned around so that an operator can use the closed seaming head or the plain seaming head.

8. A sewing machine according to claim 7, in which the turntable mechanism comprises a turning shaft (22) on the turntable, a bottom plate (32) pivoted on the turning shaft (22) a ball seating (23) located beneath the base plate, a number of steel balls (21) placed between the ball seating (23) and the bottom plate (32), and a spring (31) which is sleeved on the turning shaft (22) and which urges the steel ball seating (23), the steel balls (21) and the bottom plate (32) into contact with one another.

9. A sewing machine according to claim 8, in which oblique arcuate chutes with different deepness are provided on the circumference of the connecting point of the steel ball seating (23) and the steel balls (21), and the lever (20) acts on the steel balls (21) to drive them around the arcuate chutes to raise the sewing machine.

10. A clutch comprising a sliding block (17) including the shaft hole on and the tooth placed on top of the clutch sliding block is: there is a circumferential tooth (A) on the circumcircle of one end of the clutch sliding block, and a tooth (B) on the circumcircle of the other end, between the circumferential tooth (A) and the tooth (B), there is a projected circular guage block, there is also a tooth (C) in the inscribed circle of the clutch sliding block.

11. A clutch according to claim 10, in which the sliding block circumferential tooth (A) is a spline tooth, its tooth crest and tooth root form a trace which is a coaxial circumference of circumcircle of the clutch sliding block, there is a tool recess between the circumferential tooth and (A) and the circular guage block.

12. A clutch according to claim 10 or 11, in which the tooth (B) is a contrate tooth, its tooth crest and root form a trace which is a side surface perpendicular to the shaft hole of the clutch sliding block.

13. A clutch according to claim 10,11 or 12, in which the tooth (C) is a circumferential tooth which is on the same end of the tooth (B), its tooth crest and root form a trace which is a coaxial circumference of the inscribed circle of the clutch sliding block, there is a tool recess on one side of the tooth (C).

14. A clutch according to claim 10,11,12 or 13, in which, in the sliding block (17) there are three steps in the circumcircle and two in the inscribed circle of the clutch sliding block.
